# EUROPEAN PATENT SPECIFICATION

(11) **EP 1 819 581 B1**
(45) Date of publication and mention of the grant of the patent: **27.05.2009**
(21) Application number: 05808192.8
(22) Date of filing: 24.11.2005
(51) Int. Cl.: B62K 25/02

(54) **CLAMPING METHOD AND DEVICE FOR THE FRONT WHEEL OF A VEHICLE LIKE A MOTORBIKE, A BICYCLE OR SUCHLIKE**
KLEMMVERFAHREN UND -VORRICHTUNG FÜR DAS VORDERRAD EINES FAHRZEUGS, WIE ZUM BEISPIEL EINES MOTORRADS, EINES FAHRRADS ODER DERGLEICHEN
PROCEDE ET DISPOSITIF DE SERRAGE DE LA ROUE AVANT D'UN VEHICULE DE TYPE MOTOCYCLE, BICYCLETTE OU ANALOGUE

(30) Priority: 25.11.2004 IT UD20040220
(43) Date of publication of application: 22.08.2007
(73) Proprietor: Danelutti, Massimo, 33030 Goricizza di Codroipo (IT)
(72) Inventor: Danelutti, Massimo, 33030 Goricizza di Codroipo (IT)
(74) Representative: Petraz, Gilberto Luigi
(86) International application number: PCT/IB2005/003543
(87) International publication number: WO 2006/056869

(56) References cited:
- FR-A- 2 483 350
- FR-A- 2 490 176
- FR-A- 2 578 505
- GB-A- 181 861
- US-A- 3 694 004
- US-A- 4 455 032
- PATENT ABSTRACTS OF JAPAN vol. 016, no. 452 (M-1313), 21 September 1992 (1992-09-21) & JP 04 159180 A (YAMAHA MOTOR CO LTD), 2 June 1992 (1992-06-02) cited in the application

## Description

### FIELD OF THE INVENTION

The present invention concerns a clamping method and the relative device to removably assemble a wheel to the front fork of a vehicle, like a motorbike, a bicycle or suchlike.

### BACKGROUND OF THE INVENTION

A clamping device is known which is used to removably assemble a wheel on the front fork of a motorbike, either on-road or off-road, but possibly also on the front fork of a bicycle.

The front fork comprises two suspensions, disposed parallel and separated from each other, and a pair of plates, pivoted on a steering pin and able to connect the upper ends of the suspensions. In the state of the art, the forks are of the traditional type, wherein the suspensions have a rod in their upper part and a corresponding jacket for the rod in the lower part, or they are of the upside down type, wherein the suspensions have a rod and jacket in an inverted position with respect to the previous type of fork.

The known clamping device, in the case of upside down forks, is assembled at the lower end of the rod of each suspension, while in the case of traditional forks, it is made solid with the lower end of the jacket of the suspension.

In both these solutions, the clamping device comprises two aluminum supports, called feet, on each of which a circular through hole is made, into which a rotation pin of the wheel is able to be inserted, for the univocal attachment of the wheel to the fork. In the case of on-road motorbikes, the hole is mainly made in axis with the suspensions, while in the case of off-road motorbikes the hole is made mainly in a forward position with respect to the axis of the suspensions, in order to guarantee a greater excursion of the front fork, in order to absorb the unevenness of the ground.

In motorbikes provided with disk brakes, a connection element is made on one of the two supports behind said circular seating and is able to connect to said support the caliper of the front brake of the motorbike. In another known solution, if the brake provides to use one or more braking disks on both sides of the wheel, a connection element is made on both supports, so that each of the latter supports a relative caliper of the front brake.

In motorbikes, especially those used in sports competitions, there is a need to effect a plurality of adjustments on the front fork, or on the steering pin, so as to vary the value of the trail, that is, the distance between the projection of the rotation pin on the ground and the intersection between the ground and the extension of the axis of the steering pin. If the value of the trail is high, then the motorbike is more stable along straight stretches but also not very manageable during the changes of direction, and vice versa, if the value of the trail is lower.

Since the pivoting of the wheel is univocal with respect to the fork, in order to adjust the value of the trail it is necessary to modify the position of the fork by varying the disposition of the plates that form the steering tube, so as to vary the interaxis, or offset, between the suspensions and the steering pin, and/or their inclination. These operations are difficult to do, however, and take a lot of time and specialized manpower to do them in the correct way.

The state of the art also includes the following documents: GB-A-181,861; FR-A-2.490.176; US-A-3,694,004; US-A-4,455,032; FR-A-2.578.505; JP-A-04-159180; FR-A-2.483.350.

In particular, from GB-A-181, 861 (which describes all the features of the preamble of claims 1 and 13) a device for adjusting the trail of the front wheel of a cycle is known, comprising a piece having a longitudinal slot, closed to the opposite ends and wherein the rotation pin, or axle, of the front wheel is slidably inserted. Serration or other means are simply provided to prevent slipping of the wheel in the slot, even if they are neither shown, nor disclosed. However, in this known device, the rotation pin is not well locked around all its cylindrical surface and is subject to misalignments and to many vibrations.

Moreover, from FR-A-2.490.176 it is known a device for regulating the position of the rear wheel of a bicycle with respect to the frame thereof, which comprises rear plate provided with a longitudinal slot, closed to the rear end and open to the front end, on which the rotation pin of the rear wheel can be inserted. In the longitudinal slot, starting from the rear end thereof, the frame plate is provided with a shoulder, wherein a positioning member, disposed between the rear end of the slot and the rotation pin, is screwed. However, also in this known device, the rotation pin is not well locked around all its cylindrical surface and is subject to misalignments and to many vibrations.

One purpose of the present invention is to achieve a clamping device and perfect a corresponding method which will allow a simple, rapid, effective and precise adjustment of the value of the trail of the motorbike and the interaxis between the wheels and, consequently, the repositioning of the caliper, or calipers, of the front brake according to the position of the wheel pin and the diameter of the braking disk or disks.

Another purpose of the present invention is to achieve a clamping device and perfect a corresponding method which will allow to adjust the value of the trail of the motorbike, keeping the inclination of the suspensions constant, or to vary the inclination of the suspensions restoring the original values of trail and interaxis.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purposes, a clamping device according to the present invention is used to removably assemble a wheel, rotatable on its own rotation pin, to the front fork of a motorbike.

According to a characteristic of the present invention, the clamping device comprises positioning means able to define a seating for the rotation pin.

The seating is able to be disposed in a determinate position, which is selectively adjustable with respect to the fork.

In a first form of embodiment of the invention, the clamping device also comprises a pair of support elements each provided with an aperture, able to house one end of the rotation pin of the wheel, and the positioning means comprises bushing means disposed in said aperture and defining said seating for the rotation pin.

Each seating is able to be disposed in a predetermined position with respect to the aperture so as to position the rotation pin in a determinate position with respect to the fork. Each position of the rotation pin of the wheel on the fork corresponds to a pre-determinate value of the trail of the motorbike, and hence to corresponding performances of the latter in terms of stability on the straight and handling in the changes of direction.

In a preferential form of embodiment, the aperture is substantially an eyelet, made on the support in a substantially horizontal or inclined or vertical position, or has a substantially polygonal shape.

According to a first variant, the bushing means comprises a series of shaped bushings, able to be housed selectively, without play, inside said eyelet and each having their own seating disposed so as to correspond to a determinate value of the trail.

In a second variant, the positioning means comprises a cylindrical or polygonal bushing, which is disposed in said aperture with play and whose position in the aperture is defined by means of a first screw, screwed onto a first end of the aperture, and a second screw, screwed onto a second end of the aperture.

The screws clamp the cylindrical bushing between them, and their progressive screwing or unscrewing allows to position the cylindrical or polygonal bushing in a predetermined position in the aperture corresponding to a determinate value of the trail.

According to another variant, each support element also comprises an auxiliary element, assembled on its front part and defining said aperture with the support element.

An adjustment means is interposed between the front part of the support element and the auxiliary element so as to adjust the position of the aperture with respect to the fork.

On at least one support element a connection means is made, able to connect braking means to the support element itself. A second adjustment means is advantageously able to adjust the position of the braking means on the support element, according to the position of the rotation pin of the wheel on the fork and also, possibly, according to the diameter of the brake disk used.

The method to clamp the wheel to the front fork of the motorbike comprises a first positioning step in which the seating is defined for the rotation pin, and a second positioning step in which the seating is disposed in a determinate position, which can be adjusted with respect to the fork.

To be more exact, if the positioning means comprises the bushing means, in the first positioning step said bushing means is disposed inside the aperture of each support element, so as to define the seating for the rotation pin, and in the second positioning step the rotation pin is disposed in the corresponding seating of each support element and, consequently, is positioned with respect to the fork according to a determinate value of the trail.

A third assembly step provides to position braking means on connection means made on at least a support element behind the aperture. A second adjustment means is disposed on the connection means in order to adjust the position of the braking means on the support element.

If the bushing means comprises the series of shaped bushings, prior to the first positioning step a step is provided to select the shaped bushings and the correlated second adjustment means according to a determinate value of advance of the rotation pin, the trail and the interaxis between the wheels of the motorbike. The selection of the shaped bushings and the second adjustment means is made using for example a specific table.

The clamping method and device according to the present invention allow to adjust, simply, rapidly and precisely, the value of advance, the trail and the interaxis between the wheels and, consequently, to obtain the desired performance of the motorbike.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral schematic view of the front fork of a motorbike with the clamping device according to the present invention;
- fig. 2 is a section from II to II of fig. 1;
- fig. 3 is a partly sectioned lateral view of the clamping device according to the present invention;
- figs. 4 to 6 show different variants of a detail of fig. 3;
- fig. 7 is a partly sectioned lateral view of a first variant of fig. 3;
- fig. 8 is a section of a variant of a detail of fig. 7;
- fig. 9 is a partly sectioned lateral view of a second variant of fig. 3;
- figs. 10 to 14 are exploded views that show other variants of fig. 3;
- fig. 15 is a table for choosing the clamping device according to the present invention according to the desired trail and an exploded view of said device.

### DETAILED DESCRIPTION OF A PREFERENTIAL FORM OF EMBODIMENT

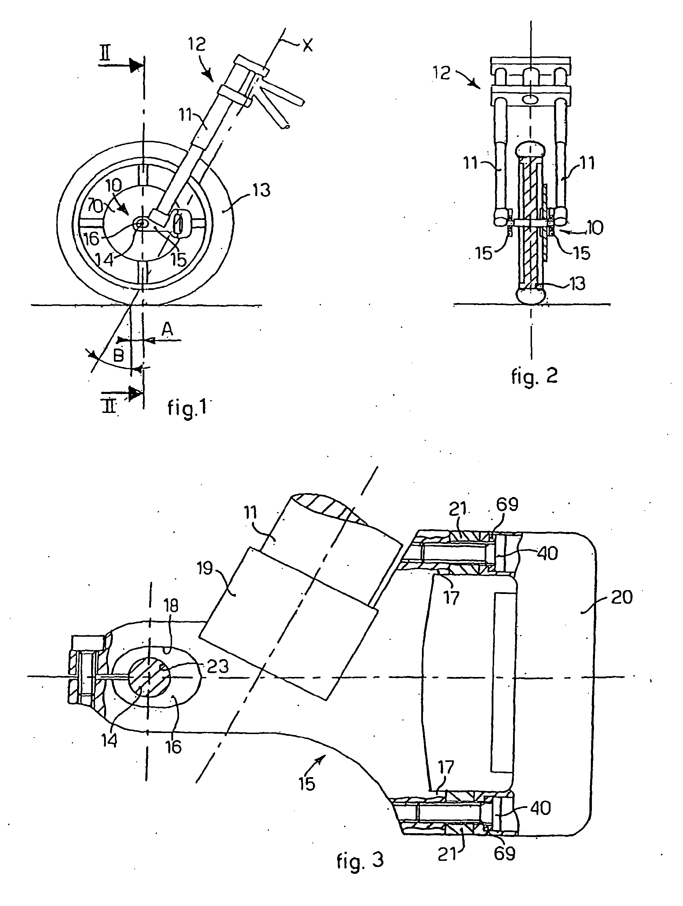

With reference to figs. 1, 2 and 3, a clamping device 10 according to the present invention is assembled on the lower ends of the suspensions 11 of the front fork 12 of a motorbike and allows to pivot to said fork 12, in different predetermined positions, a wheel 13 by means of a rotation pin 14. In this case, the motorbike is of a substantially known type and is suitable for off-road driving, and the fork 12 is of the upside down type, that is, each suspension 11 has the rod in its lower part, and in its upper part the jacket relative to the rod.

The clamping device 10 comprises a pair of aluminum supports 15, called feet, each one provided with a corresponding positioning bushing 16.

A circular seating 19, able to house the lower end of the corresponding suspension 11, and a through eyelet or aperture 18, disposed in front of the circular seating 19, which houses the corresponding bushing 16 without play, are made in a single piece on each support 15.

A through hole, or seating 23, is made on each bushing 16, in a suitably chosen position, into which the rotation pin 14 is inserted. When the bushing 16 is inserted into the aperture 18, the corresponding seating 23 thus finds itself in a predetermined position inside the aperture 18, so that the wheel 13 is pivoted to the fork 12 of the motorbike according to a predetermined value A of the trail. The trail is defined as the distance between the projection on the ground of the axis of the rotation pin 14 of the wheel 13 and the point of intersection between the ground and the axis of rotation X of the fork 12 with respect to the frame of the motorbike, which axis X is inclined by an angle β with respect to a substantially vertical plane.

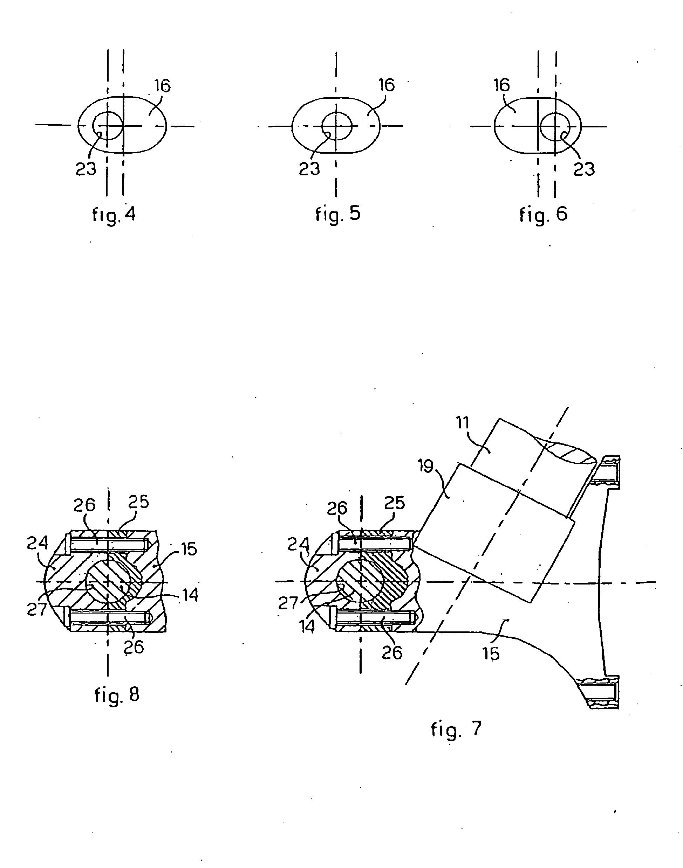

As shown in figs. 4 to 6, the seating 23 can be made in different positions on the bushing 16, also displaced by a few microns with respect to each other, and/or with different diameters, so as to allow the user to use the most suitable bushing 16 both to achieve a predetermined value A of the trail, and also according to the diameter of the rotation pin 14.

On the support 15, assembled on the left-hand suspension 11 of the fork 12 (figs. 2 and 3), two holed caliper-bearing elements 17 are made, behind the circular seating 19 and suitably distanced from each other. They are used to assemble on the clamping device 10, by means of screws 40, in a position substantially radial with respect to the wheel 13, a caliper 20 of a known disk-type braking device.

Two spacers 21, substantially cylindrical in shape, are interposed between the corresponding caliper-bearing elements 17 and the caliper 20, so as to move the caliper 20 closer to or away from the clamping device 10 according to their thickness. The thickness of the spacers 21 is chosen according to the position of the wheel 13 on the fork 12, hence according to the bushing 16 and the diameter of a disk 70 of the brake used.

A washer 69 is also interposed between the head of each screw 40 and the caliper 20, so as to guarantee that the head of the screw 40 always abuts on the caliper 20 whatever the thickness of the spacers 21 may be.

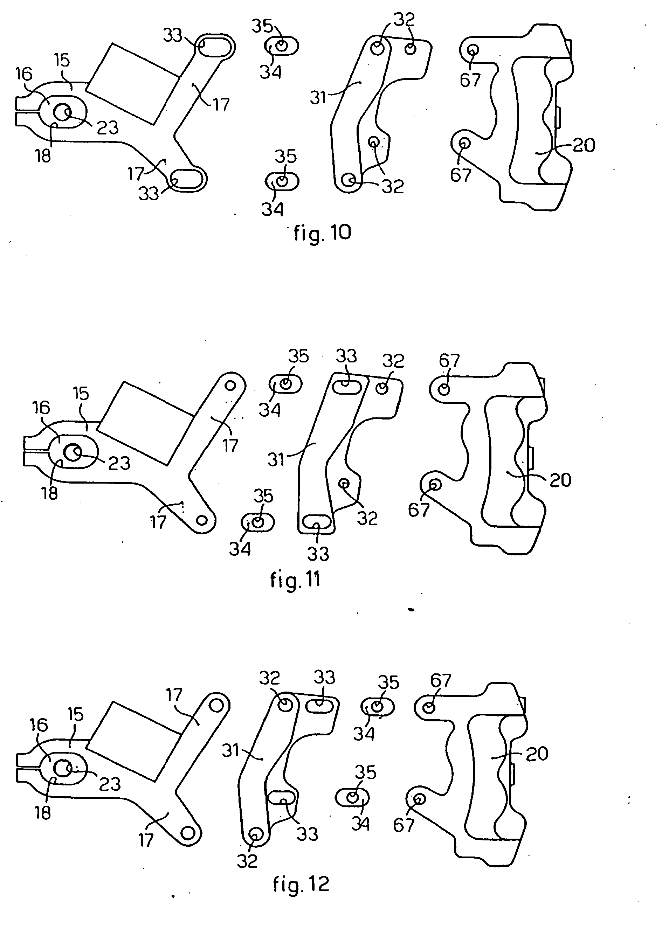

In another solution, shown in fig. 10, the caliper 20 can be attached to the caliper-bearing elements 17 in a direction substantially axial with respect to the wheel 13.

In this solution, between the caliper-bearing elements 17 a plate 31 is positioned, which comprises two pairs of through holes 32; a first pair of the holes 32 allows to assemble by means of screws the plate 31 on the caliper-bearing elements 17, while the second pair of holes 32 is mating with a pair of holes 67 made on the caliper 20 and allows the caliper 20 to be assembled by means of screws on the plate 31. To be more exact, the plate 31 allows to assemble the caliper 20 on the caliper-bearing elements 17, whatever the interaxis may be between two holes 67 made on the caliper 20.

On each caliper-bearing element 17 a through eyelet 33 is made, which houses without play a corresponding bushing 34; on the latter a through hole 35 is made in a position correlated to that of the seating 23 made on the bushing 16, housed on the aperture 18.

The caliper 20 is assembled by means of the bushing 34 on the caliper-bearing elements 17 in a position corresponding to the value of the trail obtained by means of the bushing 16.

According to a first variant of this embodiment, shown in fig. 11, two eyelets 33 are made on the plate 31 instead of the pair of through holes 32 mating with the caliper-bearing elements 17, while in a second variant, shown in fig. 12, the two eyelets 33 are made instead of the second pair of through holes 32, corresponding to the holes 67 made on the caliper 20.

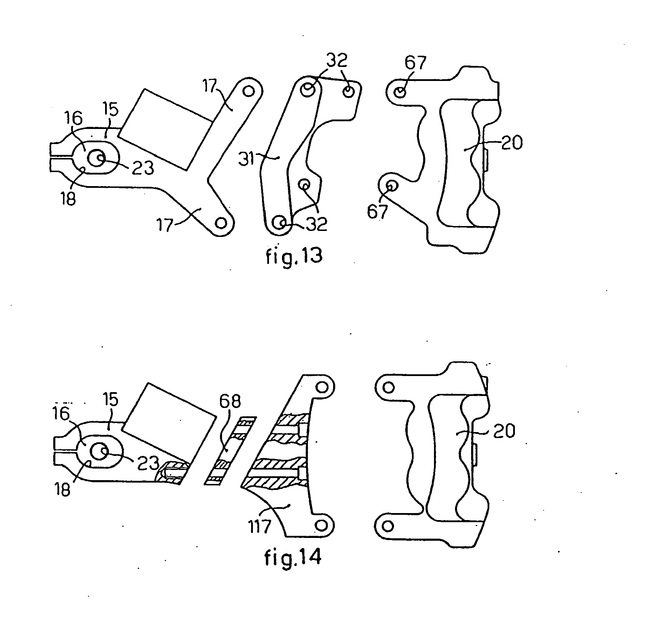

In a third variant, shown in fig. 13, the two pairs of through holes 32 are made on the plate 31 with an interaxis which depends on the value of the trail desired.

In another variant, shown in fig. 14, a caliper-bearing element 117 is assembled on the support 15 and the caliper 20 of the braking device is assembled thereon in an axial direction but, in a case not shown, in a radial direction too. A spacer 68 is interposed between the caliper-bearing element 117 and the support 15 so as to position the element 117 on the support 15 according to the desired value of the trail.

The clamping device 10 is supplied in a kit comprising the two supports 15, a series of pairs of bushings 16, each having the through hole 23 made in a determinate position and with a determinate diameter, and a plurality of pairs of spacers 21, washers 69 and screws 40, corresponding to a determinate pair of bushings 16.

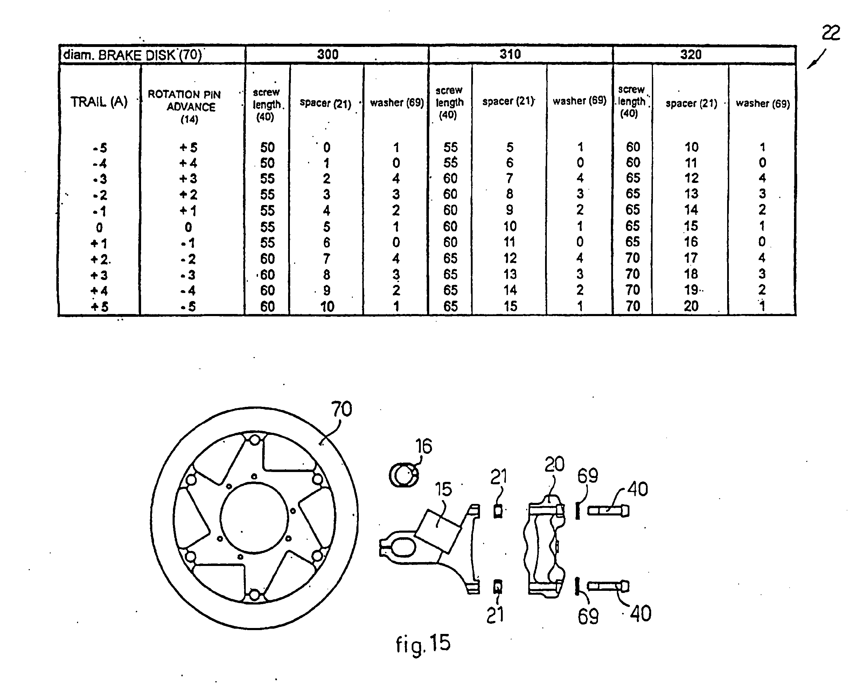

Moreover, a table 22 (fig. 15) is supplied with the kit and in this case allows to determine, according to a predetermined value A of the trail, the most appropriate pair of bushings 16, the pair of spacers 21, the pair of washers 69 and the pair of screws 40.

If the kit also comprises bushings 34, plates 31, and spacers 68, the table 22 also allows to select these bushings 34, plates 31, and spacers 68, corresponding to the pair of bushings 16 chosen.

The method to clamp the wheel 13 to the fork 12 of the motorbike comprises in sequence the following steps.

Firstly, according to the value A of the desired trail and diameter of the disk 70 of the brake (fig. 15), the user selects the pair of bushings 16 and the relative pair of spacers 21, washers 69 and screws 40, according to the value A of the trail desired and the diameter of the disk 70 of the brake, consulting the table 22 provided with the kit.

At this point a step is performed to position the chosen pair of bushings 16 in the corresponding aperture 18 of both supports 15.

Once the bushings 16 have been positioned, a step is performed to position and attach the ends of the rotation pin 14 inside the corresponding through hole 23 of each bushing 16.

When this operation is finished, the caliper 20 is connected to the corresponding support 15 by means of the caliper-bearing elements 17, or 117, and the corresponding pair of spacers 21, washers 69 and screws 40, depending on whether the assembly of the caliper 20 of the braking device is to be done in an axial or radial direction.

It is clear that modifications and/or additions of parts may be made to the clamping device 10 as described heretofore, without departing from the field and scope of the present invention.

For example, (figs. 7 and 8), each support 15 comprises an auxiliary part 24, able to be assembled on the front part by means of two screws 26. The auxiliary part 24 and the front zone of the support 15 are shaped so as to define, in correspondence with their zone of contact, a seating formed by a through hole 27, or an eyelet, able to house the rotation pin 14 of the wheel 13.

In this embodiment, a shaped spacer 25 is provided, made in different thicknesses, which is interposed between the support 15 and the auxiliary part 24 so as to move the through hole 27 closer to, or farther from, the circular seating 19, and thus position the wheel 13 on the fork 12 according to a predetermined value A of the trail.

According to a variant not shown here, the through hole 27 can be made on the auxiliary part 24, not requiring the use of shaped spacers 25.

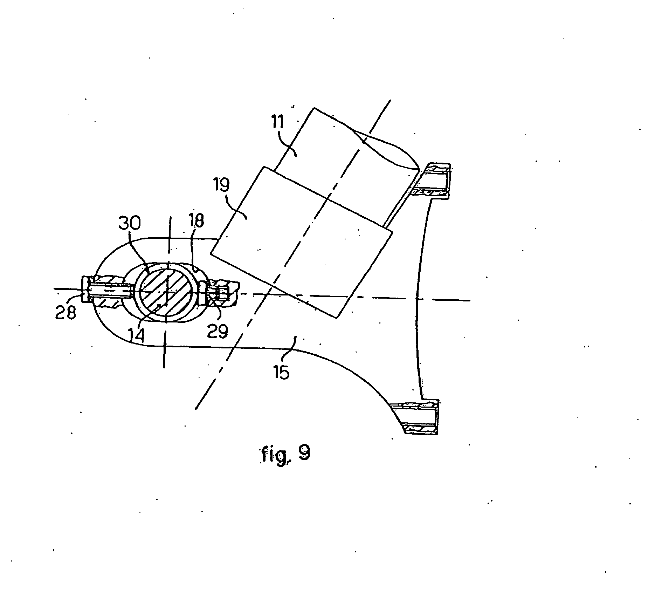

It also comes within the field of the present invention to provide that, as shown in the variant in fig. 9, two screws 28 and 29 are screwed respectively into the left and right ends of the aperture 18 of each support 15, so as to be able to clamp inside the latter a cylindrical bushing 30 into which the rotation pin 14 is inserted.

The progressive and coordinated screwing or unscrewing of the screws 28 and 29 allows to displace the cylindrical bushing 30, and consequently the rotation pin 14, to the left or right, thus reducing or increasing the value A of the trail.

A plurality of reference notches, not shown here, are made below the aperture 18, so as to allow the correct positioning of the cylindrical bushing 30 on the aperture 18.

In a variant, not shown here, the bushing used can have for example a rectangular profile, so as to guarantee a greater contact surface for the screws 28 and 29, and the eyelet too can have a rectangular shape.

According to another variant, not shown here, the bushing used is of the eccentric type, so as to be able to modify, simultaneously horizontally and vertically, the position of the rotation pin 14 with respect to the fork 12.

According to a variant of the invention, not shown here, the aperture 18 can be made in a vertical position, so as to be able to adjust the position of the wheel 13 in height.

It is also clear that, although the present invention has been described with reference to some specific examples, a person of skill in the art shall certainly be able to achieve many other equivalent forms of method and device to clamp the front wheel of a vehicle like a motorbike, a bicycle or suchlike, having the characteristics as set forth in the claims and hence all coming within the field of protection defined thereby.

## Claims

1. Clamping device to removably assemble a front wheel (13) on a fork (12) of a vehicle, in particular a motorbike, wherein said front wheel (13) is able to rotate on its own rotation pin (14), and wherein said clamping device comprises a pair of support elements (15), associated with said fork (12), on opposite sides with respect to the position of said front wheel (13), and each provided with an aperture (18) able to house said rotation pin (14), **characterised in that** the device also comprises, for each support element (15), bushing means (16, 25, 30) able to be disposed in the corresponding aperture (18), wherein each bushing means (16, 25, 30) is provided with a seating (23, 27) disposed in a determined position with respect to said aperture (18) to house and completely surround one end of said rotation pin (14), so that said seating (23, 27) assumes a determinate position, selectively adjustable, with respect to said fork (12), in accordance with the position of said seating (23, 27) with respect to said aperture (18), in order to consequently adjust also the position of said rotation pin (14) with respect to said fork (12) and the trail (A) of said front wheel.

2. Clamping device as in claim 1, **characterized in that** braking means (20) is associated with at least one of said support elements (15, 36, 57) and that the position of said braking means (20) with respect to said fork (12) is correlated to the position of said seating (23, 27) and of said rotation pin (14) with respect to said fork (12).

3. Clamping device as in claim 1 or 2, **characterized in that** said aperture (18) has the form of an eyelet.

4. Clamping device as in claim 1 or 2, **characterized in that** said aperture (18) is polygonal in shape.

5. Clamping device as in any claim from 1 to 4, **characterized in that** said bushing means comprises a series of bushings (16) shaped so as to have externally the form of said aperture (18), and able to be selectively housed without play in said aperture (18).

6. Clamping device as in any claim from 1 to 4, **characterized in that** said bushing means comprises a bushing (30) of cylindrical or polygonal shape, able to be housed with play in said aperture (18) and that a first adjustment means (28, 29) is provided to adjust the position of said bushing with respect to said aperture (18).

7. Clamping device as in claim 6, **characterized in that** said first adjustment means comprises a first screw (28), screwed in correspondence with a first end of said aperture (18), and a second screw (29), screwed in correspondence with a second end of said aperture (18), said first and second screws (28, 29) being able to contact two opposite ends of said bushing (30) in order to dispose said bushing (30) in a predetermined position in said aperture (18).

8. Clamping device as in claim 1, **characterized in that** it also comprises an auxiliary element (24), assembled on the front part of each of said support elements (15) and cooperating with said front part in order to define said seating (27).

9. Clamping device as in claim 8, **characterized in that** a second adjustment means (25) is able to be interposed between each support element (15) and the corresponding auxiliary element (24) in order to adjust the position of said seating (27) with respect to said fork (12).

10. Clamping device as in claim 8 or 9, **characterized in that** said seating is a through hole (27) substantially having the diameter of said rotation pin (14).

11. Clamping device as in claim 2, **characterized in that** on the rear part of at least one of said support elements (15) a connection means (17) is made, able to connect said braking means (20) to said support element (15).

12. Clamping device as in claim 11, **characterized in that** second adjustment means (21, 34, 31, 68) are able to be positioned on said connection means (17) in order to adjust the position of said braking means (20) on said support element (15, 36, 57), according to the position of said rotation pin (14) on said fork (12).

13. Method to removably assemble a front wheel (13) on a fork (12) of a vehicle, in particular a motorbike, wherein said wheel (13) is able to rotate on a rotation pin (14), and wherein said device comprises a pair of support elements (15), associated with said fork (12), on opposite sides with respect to the position of said front wheel (13), and each provided with an aperture (18, 27) able to house said rotation pin (14), **characterized in that** it comprises a first positioning step wherein bushing means (16, 25, 30) provided with a seating (23, 27) to house and completely surround said rotation pin (14) and disposed in a determined position with respect to said aperture (18) is inserted in the aperture (18) of each support element (15), and a second positioning step in which said rotation pin (14) is inserted in the corresponding seatings (23, 27) of said bushing means (16, 25, 30) so that the trail (A) of said front wheel is defined in accordance with the position of said seatings (23, 27) with respect to said aperture (18).

14. Clamping method as in claim 13, **characterized in that** in said first positioning step said bushing means (16, 25, 30) is positioned without play inside said aperture (18, 27), and that in said second positioning step said rotation pin (14) is housed without play in the corresponding seating (23).

15. Clamping method as in claim 13 or 14, **characterized in that** it also comprises a third step to assemble braking means (20) on connection means (17, 117) made on at least one of said support elements (15) and that, in said third assembly step, on said connection means (17, 117) adjustment means (21, 31, 34, 68) are disposed, correlated to said bushing means (16, 25, 30) and able to adjust the position of said braking means (20) on said support element (15).

16. Clamping method as in claim 13, 14 or 15, **characterized in that** said bushing means comprises a series of shaped bushings (16, 25), and that, before said first positioning step, a step is provided to select said shaped bushings (16, 25) and the corresponding adjustment means (21, 31, 34, 68) according to the adjustments to be made on said vehicle.

17. Clamping method as in claim 16, **characterized in that** the choice of said shaped bushings (16) and said adjustment means (21, 31, 34, 68) is made by consulting a specific table (22), which reports the different shaped bushings (16, 25) according to the different positionings of said rotation pin (14) with respect to said fork (12).

## Patentansprüche

1. Klemmvorrichtung, um lösbar ein Vorderrad (13) an einer Gabel (12) eines Fahrzeugs, insbesondere eines Motorrades, anzubringen, wobei sich dieses Vorderrad (13) auf seinem eigenen Drehzapfen (14) drehen kann und die Klemmvorrichtung zwei Halteelemente (15), die mit der Gabel (12) verbunden sind, auf gegenüberliegenden Seiten im Bezug auf die Position des Vorderrades (13) enthält, die jeweils mit einer Öffnung (18) versehen sind, die den Drehzapfen (14) aufnehmen kann, **dadurch gekennzeichnet, dass** die Vorrichtung für jedes Halteelement (15) zudem eine Buchseneinrichtung (16, 25, 30) enthält, die in der entsprechenden Öffnung (18) angeordnet werden kann, wobei jede Buchseneinrichtung (16, 25, 30) mit einem Sitz (23, 27) versehen ist, der in einer festgelegten Position im Bezug auf die Öffnung (18) angeordnet ist, um ein Ende des Drehzapfens (14) aufzunehmen und vollständig zu umgeben, so dass der Sitz (23, 27) eine festgelegte Position einnimmt, die im Bezug auf die Gabel (12) in Übereinstimmung mit der Position des Sitzes (23, 27) im Bezug auf die Öffnung (18) selektiv einstellbar ist, um demzufolge auch die Position des Drehzapfens (14) im Bezug auf die Gabel (12) und die Spur (A) des Vorderrades einzustellen.

2. Klemmvorrichtung nach Anspruch 1, **dadurch gekennzeichnet, dass** eine Bremseinrichtung (20) mit wenigstens einem der Halteelemente (15, 36, 57) verbunden ist und die Position der Bremseinrichtung (20) im Bezug auf die Gabel (12) mit der Position des Sitzes (23, 27) und des Drehzapfens (14) im Bezug auf die Gabel (12) korreliert.

3. Klemmvorrichtung nach Anspruch 1 oder 2, **dadurch gekennzeichnet, dass** die Öffnung (18) die Form eines Auges hat.

4. Klemmvorrichtung nach Anspruch 1 oder 2, **dadurch gekennzeichnet, dass** die Öffnung (18) eine polygonale Form hat.

5. Klemmvorrichtung nach einem der Ansprüche 1 bis 4, **dadurch gekennzeichnet, dass** die Buchseneinrichtung eine Abfolge von Buchsen (16) enthält, die so beschaffen sind, dass die außen die Form der Öffnung (18) haben und ohne Spiel wahlweise in der Öffnung (18) aufgenommen werden können.

6. Klemmevorrichtung nach einem der Ansprüche 1 bis 4, **dadurch gekennzeichnet, dass** die Buchseneinrichtung eine Buchse (30) einer zylindrischen oder polygonalen Form enthält, die in der Öffnung (18) mit Spiel aufgenommen werden kann, und dass eine erste Einstelleinrichtung (28, 29) vorgesehen ist, um die Position der Buchse im Bezug auf die Öffnung (18) einzustellen.

7. Klemmvorrichtung nach Anspruch 6, **dadurch gekennzeichnet, dass** die erste Einstelleinrichtung eine erste Schraube (28), die in Entsprechung mit einem ersten Ende der Öffnung (18) geschraubt ist, und eine zweite Schraube (29) enthält, die in Entsprechung mit einem zweiten Ende der Öffnung (18) geschraubt ist, wobei die erste und die zweite Schraube (28, 29) zwei gegenüberliegende Enden der Buchse (30) berühren können, um die Buchse (30) in einer vorbestimmten Position in der Öffnung (18) anzuordnen.

8. Klemmvorrichtung nach Anspruch 1, **dadurch gekennzeichnet, dass** sie zudem ein Hilfselement (24) enthält, dass am vorderen Teil jedes der Halteelemente (15) angebracht ist und mit dem vorderen Teil zusammenwirkt, um den Sitz (27) zu definieren.

9. Klemmvorrichtung nach Anspruch 8, **dadurch gekennzeichnet, dass** eine zweite Einstelleinrichtung (25) zwischen jedem Halteelement (15) und dem entsprechenden Hilfselement (24) angeordnet werden kann, um die Position des Sitzes (27) im Bezug auf die Gabel (12) einzustellen.

10. Klemmvorrichtung nach Anspruch 8 oder 9, **dadurch gekennzeichnet, dass** der Sitz ein Durchgangsloch (27) ist, das im wesentlichen den Durchmesser des Drehzapfens (14) hat.

11. Klemmvorrichtung nach Anspruch 2, **dadurch gekennzeichnet, dass** am hinteren Teil wenigstens eines der Halteelemente (15) eine Verbindungseinrichtung (17) ausgebildet ist, die die Bremseinrichtung (20) mit dem Halteelement (15) verbinden kann.

12. Klemmvorrichtung nach Anspruch 11, **dadurch gekennzeichnet, dass** zweite Einstelleinrichtungen (21, 34, 31, 68) an der Verbindungseinrichtung (17) angeordnet werden können, um die Position der Bremseinrichtung (20) am Halteelement (15, 36, 57) gemäß der Position des Drehzapfens (14) an der Gabel (12) einzustellen.

13. Verfahren zum lösbaren Anbringen eines Vorderrades (13) an einer Gabel (12) eines Fahrzeugs, insbesondere eines Motorrades, wobei sich dieses Rad (13) auf einem Drehzapfen (14) drehen kann die und Vorrichtung zwei Halteelemente (15), die mit der Gabel (12) verbunden sind, auf gegenüberliegenden Seiten im Bezug auf die Position des Vorderrades (13) enthält, die jeweils mit einer Öffnung (18, 27) versehen sind, die den Drehzapfen (14) aufnehmen kann, **dadurch gekennzeichnet, dass** es einen ersten Positionierungsschritt umfasst, bei dem die Buchseneinrichtung (16, 25, 30), die mit einem Sitz (23, 27) versehen ist, der den Drehzapfen (14) aufnimmt und vollständig umgibt und in einer festgelegten Position im Bezug auf die Öffnung (18) angeordnet ist, in die Öffnung (18) jedes Halteelementes (15) eingefügt wird, und einen zweiten Positionierungsschritt, bei dem der Drehzapfen (14) in die entsprechenden Sitze (23, 27) der Buchseneinrichtung (16, 25, 30) derart eingefügt wird, dass die Spur (A) des Vorderrades in Übereinstimmung mit der Position der Sitze (23, 27) im Bezug auf die Öffnung (18) definiert wird.

14. Klemmverfahren nach Anspruch 13, **dadurch gekennzeichnet, dass** beim ersten Positionierungsschritt die Buchseneinrichtung (16, 25, 30) ohne Spiel in der Öffnung (18, 27) angeordnet wird, und dass beim zweiten Positionierungsschritt der Drehzapfen (14) ohne Spiel im entsprechenden Sitz (23) aufgenommen wird.

15. Klemmverfahren nach Anspruch 13 oder 14, **dadurch gekennzeichnet, dass** es zudem einen dritten Schritt umfasst, um die Bremseinrichtung (20) an der Verbindungseinrichtung (17, 117) anzubringen, die an wenigstens einem der Halteelemente (15) ausgebildet ist, und dass bei diesem dritten Anbringungsschritt an der Verbindungseinrichtung (17, 117) Einstelleinrichtungen (21, 31, 34, 68) angeordnet werden, die mit der Buchseneinrichtung (16, 25, 30) korrelieren und in der Lage sind, die Position der Bremseinrichtung (20) am Halteelement (15) einzustellen.

16. Klemmverfahren nach Anspruch 13, 14 oder 15, **dadurch gekennzeichnet, dass** die Buchseneinrichtung eine Reihe geformter Buchsen (16, 25) enthält, und dass vor dem ersten Positionierungsschritt ein Schritt vorgesehen ist, um die geformten Buchsen (16, 25) und die entsprechenden Einstelleinrichtungen (21, 31, 34, 68) in Übereinstimmung mit den Einstellungen zu wählen, die am Fahrzeug vorzunehmen sind.

17. Klemmverfahren nach Anspruch 16, **dadurch gekennzeichnet, dass** die Wahl der geformten Buchsen (16) und der Einstelleinrichtungen (21, 31, 34, 68) unter Verwendung einer speziellen Tabelle (22) erfolgt, die die unterschiedlichen geformten Buchsen (16, 25) gemäß den unterschiedlichen Positionierungen des Drehzapfens (14) im Bezug auf die Gabel (12) auflistet.

## Revendications

1. Dispositif de serrage pour assembler de manière amovible une roue avant (13) sur une fourche (12) d'un véhicule, en particulier d'une motocyclette, dans lequel ladite roue avant (13) peut tourner sur son propre axe de rotation (14), et dans lequel ledit dispositif de serrage comprend une paire d'éléments de support (15) associée à ladite fourche (12), sur les côtés opposés par rapport à la position de ladite roue avant (13) et chacun prévu avec une ouverture (18) capable de loger ledit axe de rotation (14), **caractérisé en ce que** le dispositif comprend également, pour chaque élément de support (15), des moyens de douille (16, 25, 30) pouvant être disposés dans l'ouverture (18) correspondante, dans lequel chaque moyen de douille (16, 25, 30) est prévu avec un siège (23, 27) disposé dans une position déterminée par rapport à ladite ouverture (18) pour loger et complètement entourer une extrémité dudit axe de rotation (14), de sorte que ledit siège (23, 27) prend une position déterminée, sélectivement réglable, par rapport à ladite fourche (12), selon la position dudit siège (23, 27) par rapport à ladite ouverture (18), afin d'ajuster également en conséquence la position dudit axe de rotation (14) par rapport à ladite fourche (12) et à la traînée (A) de ladite roue avant.

2. Dispositif de serrage selon la revendication 1, **caractérisé en ce que** des moyens de freinage (20) sont associés avec au moins l'un desdits éléments de support (15, 36, 57) et **en ce que** la position desdits moyens de freinage (20) par rapport à ladite fourche (12) est corrélée à la position dudit siège (23, 27) et dudit axe de rotation (14) par rapport à ladite fourche (12).

3. Dispositif de serrage selon la revendication 1 ou 2, **caractérisé en ce que** ladite ouverture (18) a la forme d'un oeillet.

4. Dispositif de serrage selon la revendication 1 ou 2, **caractérisé en ce que** ladite ouverture (18) a une forme polygonale.

5. Dispositif de serrage selon l'une quelconque des revendications 1 à 4, **caractérisé en ce que** lesdits moyens de douille comprennent une série de douilles (16) formées afin d'avoir, extérieurement, la forme de ladite ouverture (18) et de pouvoir être sélectivement logées sans jeu dans ladite ouverture (18).

6. Dispositif de serrage selon l'une quelconque des revendications 1 à 4, **caractérisé en ce que** lesdits moyens de douille comprennent une douille (30) de forme cylindrique ou polygonale, pouvant être logée avec du jeu dans ladite ouverture (18) et **en ce que** des premiers moyens d'ajustement (28, 29) sont prévus pour ajuster la position de ladite douille par rapport à ladite ouverture (18).

7. Dispositif de serrage selon la revendication 6, **caractérisé en ce que** lesdits premiers moyens de réglage comprennent une première vis (28), vissée en correspondance avec une première extrémité de ladite ouverture (18) et une seconde vis (29) vissée en correspondance avec une seconde extrémité de ladite ouverture (18), lesdites première et seconde vis (28, 29) pouvant être en contact avec deux extrémités opposées de ladite douille (30) afin de disposer ladite douille (30) dans une position prédéterminée dans ladite ouverture (18).

8. Dispositif de serrage selon la revendication 1, **caractérisé en ce qu'**il comprend également un élément auxiliaire (24), assemblé sur la partie avant de chacun desdits éléments de support (15) et coopérant avec ladite partie avant afin de définir ledit siège (27).

9. Dispositif de serrage selon la revendication 8, **caractérisé en ce que** des seconds moyens de réglage (25) peuvent être intercalés entre chaque élément de support (15) et l'élément auxiliaire (24) correspondant afin de régler la position dudit siège (27) par rapport à ladite fourche (12).

10. Dispositif de serrage selon la revendication 8 ou 9, **caractérisé en ce que** ladite siège est un trou de passage (27) ayant sensiblement le diamètre dudit axe de rotation (14).

11. Dispositif de serrage selon la revendication 2, **caractérisé en ce que** sur la partie arrière d'au moins l'un desdits éléments de support (15), on réalise des moyens de raccordement (17) pouvant raccorder lesdits moyens de freinage (20) audit élément de support (15).

12. Dispositif de serrage selon la revendication 11, **caractérisé en ce que** les seconds moyens de réglage (21, 34, 31, 68) peuvent être positionnés sur lesdits moyens de raccordement (17) afin de régler la position desdits moyens de freinage (20) sur ledit élément de support (15, 36, 57) selon la position dudit axe de rotation (14) sur ladite fourche (12).

13. Procédé pour assembler de manière amovible une roue avant (13) sur une fourche (12) d'un véhicule, en particulier une motocyclette, dans lequel ladite roue (13) peut tourner sur un axe de rotation (14), et dans lequel ledit dispositif comprend une paire d'éléments de support (15), associés à ladite fourche (12), sur les côtés opposés par rapport à la position de ladite roue avant (13) et chacun prévu avec une ouverture (18, 27) pouvant loger ledit axe de rotation (14), **caractérisé en ce qu'**il comprend une première étape de positionnement dans laquelle des moyens de douille (16, 25, 30) prévus avec un siège (23, 27) pour loger et entourer complètement ledit axe de rotation (14) et disposés dans une position déterminée par rapport à ladite ouverture (18) sont insérés dans l'ouverture (18) de chaque élément de support (15), et une deuxième étape de positionnement dans laquelle ledit axe de rotation (14) est inséré dans les sièges (23, 27) correspondants desdits moyens de douille (16, 25, 30) de sorte que la traînée (A) de ladite roue avant est définie selon la position desdits sièges (23, 27) par rapport à ladite ouverture (18).

14. Procédé de serrage selon la revendication 13, **caractérisé en ce que** dans ladite première étape de positionnement, lesdits moyens de douille (16, 25, 30) sont positionnés sans jeu à l'intérieur de ladite ouverture (18, 27), et **en ce que** dans ladite deuxième étape de positionnement, ledit axe de rotation (14) est logé sans jeu dans le siège (23) correspondant.

15. Procédé de serrage selon la revendication 13 ou 14, **caractérisé en ce qu'**il comprend également une troisième étape pour assembler les moyens de freinage (20) sur les moyens de raccordement (17, 117) réalisés sur au moins l'un desdits éléments de support (15) et **en ce que**, dans ladite troisième étape d'assemblage, sur lesdits moyens de raccordement (17, 117), on dispose des moyens de réglage (21, 31, 34, 68), corrélés avec lesdits moyens de douille (16, 25, 30) et pouvant régler la position desdits moyens de freinage (20) sur ledit élément de support (15).

16. Procédé de serrage selon la revendication 13, 14 ou 15, **caractérisé en ce que** lesdits moyens de douille comprennent une série de douilles formées (16, 25) et **en ce que**, avant ladite première étape de positionnement, on prévoit une étape pour sélectionner lesdites douilles formées (16, 25) et les moyens de réglage (21, 31, 34, 68) correspondants selon les réglages à réaliser sur ledit véhicule.

17. Procédé de serrage selon la revendication 16, **caractérisé en ce que** le choix desdites douilles formées (16) et desdits moyens de réglage (21, 31, 34, 68) est réalisé en consultant un tableau spécifique (22) qui reporte les différentes douilles formées (16, 25) selon les différents positionnements dudit axe de rotation (14) par rapport à ladite fourche (12).
